(19) Europäisches Patentamt
European Patent Office
Office européen des brevets

(11) **EP 4 205 570 B1**

(12) **EUROPEAN PATENT SPECIFICATION**

(45) Date of publication and mention
of the grant of the patent:
**03.12.2025 Bulletin 2025/49**

(21) Application number: **22813869.9**

(22) Date of filing: **28.10.2022**

(51) International Patent Classification (IPC):
*A24F 13/04* (2006.01)    *A24F 13/00* (2006.01)
*A24F 13/06* (2006.01)

(52) Cooperative Patent Classification (CPC):
**A24D 1/025; A24F 13/00; A24F 13/04; A24F 13/06**

(86) International application number:
**PCT/KR2022/016666**

(87) International publication number:
**WO 2023/080554 (11.05.2023 Gazette 2023/19)**

(54) **SIDESTREAM SMOKE REMOVAL DEVICE COMPRISING SMOKING ARTICLE RECOGNITION PART**

SEITENSTROMRAUCHENTFERNUNGSVORRICHTUNG MIT
RAUCHARTIKELERKENNUNGSTEIL

DISPOSITIF D'ÉLIMINATION DE FUMÉE LATÉRALE COMPRENANT UNE PARTIE DE
RECONNAISSANCE D'ARTICLE À FUMER

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:   **02.11.2021   KR 20210148385**

(43) Date of publication of application:
**05.07.2023   Bulletin 2023/27**

(73) Proprietor: **KT & G Corporation
Daejeon 34337 (KR)**

(72) Inventors:
• **AHN, Ki Jin**
  **Daejeon 34128 (KR)**
• **KIM, Han Jin**
  **Daejeon 34128 (KR)**
• **KIM, Young Sin**
  **Daejeon 34128 (KR)**

(74) Representative: **Ter Meer Steinmeister & Partner
Patentanwälte mbB
Nymphenburger Straße 4
80335 München (DE)**

(56) References cited:
  WO-A1-2019/185748     CN-A- 110 786 546
  KR-A- 20160 124 853   KR-A- 20170 130 689
  KR-B1- 101 926 724    US-A1- 2020 154 760
  US-B2- 8 109 276

# Description

## Technical Field

The present disclosure relates to a sidestream smoke removing device including a smoking article detection part. More specifically, the present disclosure relates to a sidestream smoke removing device including a smoking article detection part configured to detect a smoking article suitable for the sidestream smoke removing device.

## Background Art

Cigarette smoke produced through smoking may be classified as main stream smoke delivered to the mouth through a cigarette filter and sidestream smoke discharged to air without passing through the filter.

A sidestream smoke removing device is a type of smoking accessory devised to, for example, reduce cigarette smell from hands, remove (or purify) sidestream smoke, and the like. The sidestream smoke removing device typically has defined therein an enclosed smoking space and a sidestream smoke removing means. A user may smoke by inserting a cigarette into the smoking space inside the sidestream smoke removing device.

In order to improve the functionality of the sidestream smoke removing device, it is important to insert a suitable cigarette into the sidestream smoke removing device. Otherwise, not only may the functionality of the sidestream smoke removing device not be fully realized, but also there may be a danger due to an unexpected situation. In this regard, the inventor has completed the present invention by continuously researching detection of a cigarette by a sidestream smoke removing device so that the sidestream smoke removing device may operate only when a suitable cigarette is inserted thereinto KR 2017 0130689 A relates to a portable cigarette smoke eliminator according to the preamble of the independent claim 1. A further document of the available prior art is CN110786546A.

## Citation List

## Patent Literature

Patent Literature 1: Korean Patent Application Laid-Open No. 10-2001-0031288

## DISCLOSURE

## Technical Problem

The present disclosure has been made to solve the above problems, and an object of the present disclosure is to propose a sidestream smoke removing device including a smoking article detection part configured to detect a smoking article suitable for a specific sidestream smoke removing device.

## Technical Solution

According to a first aspect of the present disclosure, provided is a sidestream smoke removing device including: a housing having a smoking space defined therein; an article inserting part positioned on one end of the housing and having an open area through which a smoking article is inserted into the smoking space; a sidestream smoke processing part positioned at a distance from an upstream end of the smoking article inserted into the smoking space and configured to process sidestream smoke produced from the smoking article; and an article detection part positioned in the article inserting part to be adjacent to the smoking article so as to detect the smoking article inserted into the article inserting part.

According to an embodiment of the present disclosure, the smoking article includes low flammability coating portions within a cigarette paper surrounding the smoking material. The article detection part is configured to detect the low flammability coating portions of the smoking article.

According to an embodiment of the present disclosure, the sidestream smoke removing device may further include a control part configured to control overall operations of the sidestream smoke removing device. A result of the detection of the smoking article by the article detection part may be transferred to the control part.

According to an embodiment of the present disclosure, the low flammability coating portions of the smoking article may contain Arabic gum.

According to an embodiment of the present disclosure, the sidestream smoke removing device may further include an ignition part positioned within the housing and configured to ignite the smoking article inserted into the smoking space. The ignition part may ignite the smoking article when the smoking article is detected by the article detection part to be suitable for the sidestream smoke removing device.

According to an embodiment of the present disclosure, the sidestream smoke processing part may include: a filter configured to filter the sidestream smoke; and a ventilation fan through which the sidestream smoke is discharged. The ventilation fan may be operated by detecting the sidestream smoke produced from the smoking article.

According to an embodiment of the present disclosure, the sidestream smoke removing device may further include an elastic support part disposed to elastically support an upstream end of the smoking article as the smoking article is inserted through the article inserting part. The ignition part may be coupled to the elastic support part and be disposed to be in contact with the upstream end of the smoking article as the smoking article is inserted. When the ignition part is first contacted with the upstream end of the smoking article, the low flammability coating portions of the smoking article may be positioned in the open area of the article inserting part.

According to an embodiment of the present disclosure, when the ignition part is first contacted with the upstream end of the smoking article, the article detection part may detect an adjacent portion of the smoking article.

According to an embodiment of the present disclosure, a sidestream smoke removing system comprising the sidestream smoke removing device and a smoking article is provided, wherein the smoking article includes first low flammability coating portions and second low flammability coating portions spaced apart from the first low flammability coating portions in a longitudinal direction of the smoking article. The sidestream smoke removing device further includes a first article detector and a second article detector. The first article detector is positioned in the article inserting part to be adjacent to the smoking article, and the second article detector is positioned within the housing and spaced apart from the first article detector in the longitudinal direction by a distance equal to a distance by which the first low flammability coating portions are spaced apart from the second low flammability coating portions.

According to an embodiment of the present disclosure, when the smoking article is inserted, the sidestream smoke removing device may detect the smoking article to be suitable for the sidestream smoke removing device when the first low flammability coating portions and the second low flammability coating portions of the smoking article are simultaneously detected by the first article detector and the second article detector, respectively.

According to an embodiment of the present disclosure, the first article detector and the second article detector may be spaced apart from each other in a longitudinal direction of the sidestream smoke removing device by a distance of 5 mm to 10 mm.

**Advantageous Effects**

The sidestream smoke removing device according to an embodiment of the present disclosure detects an inserted smoking article using the article detection part and is activated only when the smoking article is inserted thereinto so as not only to provide the functionality of the device to the maximum extent but also to have superior effects in terms of the durability and stability of the device.

**Brief Description of Drawings**

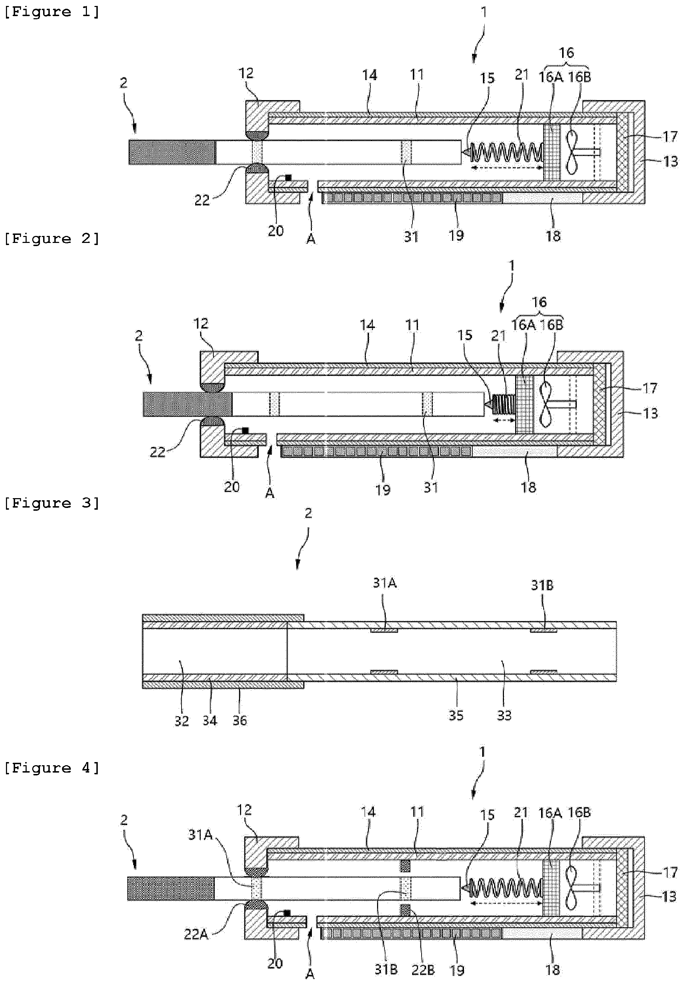

FIG. 1 is a schematic view illustrating a sidestream smoke removing device to which a smoking article according to an embodiment of the present disclosure is applied. FIG. 1 illustrates the positional relationship between an article detection part and low flammability coating portions when an inserted smoking article is initially in contact with an ignition part coupled to an elastic support part.

FIG. 2 is a schematic view illustrating the sidestream smoke removing device to which the smoking article according to an embodiment of the present disclosure is applied. FIG. 2 illustrates the positional relationship between the article detection part and the low flammability coating portions when the smoking article is compressed to the maximum extent in response to the elastic support part being compressed to the maximum extent.

FIG. 3 is a schematic view illustrating the smoking article including the low flammability coating portions according to an embodiment of the present disclosure.

FIG. 4 is a schematic view illustrating the sidestream smoke removing device to which the smoking article according to an embodiment of the present disclosure is applied. FIG. 4 illustrates the positional relationship between the article detection part and the low flammability coating portions when the inserted smoking article is initially in contact with the ignition part coupled to the elastic support part in the sidestream smoke removing device including a first article detector capable of detecting the first low flammability coating portions and a second article detector capable of detecting the second low flammability coating portions.

**Best Mode**

Hereinafter, embodiments will be described in detail with reference to the illustrative drawings. It should be understood that the same reference numerals will be used to refer to the same or like components throughout the drawings. In the description of embodiments, detailed descriptions of components or functions will be omitted when it is determined that the description may render the subject matter in some embodiments of the present disclosure rather unclear.

In addition, terms, such as "first", "second", "A", "B", "(a)", and "(b)" may be used herein to describe components of the present disclosure. Each of these terms is not used to define the essence, order, sequence, or number of components, etc., but is used merely to distinguish the corresponding component from other components. When it is mentioned that a component "is connected, coupled, or joined to" another component, it should be interpreted that, not only can the component "be connected, coupled, or joined to" the other component, but the component and the other component can also "be connected, coupled, or joined to" to each other via a further component.

When a first component is included in a first embodiment and a second component having the same function as that of the first component is included in a second embodiment, the second component may be described using the same name as the first component. Unless stated to the contrary, a description of one embodiment may be applied to other embodiments, and a specific description of an overlapping range will be omitted.

Herein, the term "smoking article" may refer to any product that may be smoked or any product that may simulate smoking, irrespective of being based on tobacco, tobacco derivatives, expanded tobacco, reconstituted tobacco, or tobacco substitutes. For example, the smoking article may include a product that may be smoked, such as cigarette, cigar, or cigarillo.

Herein, the term "smoking material" may refer to a material that generates smoke and/or aerosols or is used in smoking. For example, the smoking material may include a tobacco material. The tobacco material may include, for example, tobacco leaf fragments, tobacco plant stems, or materials processed from at least one thereof. According to an embodiment of the present disclosure, the tobacco material may include ground tobacco leaves, ground reconstituted tobacco, expanded shredded tobacco, expanded tobacco midribs, reconstituted tobacco leaves, and the like, but is not limited thereto.

Herein, the term "upstream" or "upstream direction" may refer to a direction away from the oral region of a smoker, and the term "downstream" or "downstream direction" may refer to a direction toward the oral region of the smoker. The terms "upstream" and "downstream" may be used to describe relative positions of components of a smoking article. For example, in a smoking article 2 illustrated in FIG. 1, 2 or 4, a filter part is disposed downstream or in a downstream direction of a smoking material part, and the smoking material part is disposed upstream or in an upstream direction of the filter part.

Herein, the term "longitudinal direction" may refer to a direction matching the longitudinal axis of the smoking article or the sidestream smoke removing device, and the term "perpendicular direction" refers to a direction perpendicular to the longitudinal axis of the smoking article or the sidestream smoke removing device.

Herein, the term "puff" refers to inhalation of a user. The inhalation refers to an instance of inhaling air or smoke into the oral cavity, the nasal cavity, or the lungs of the user through the mouth or the nose of the user.

Hereinafter, a variety of embodiments of the present will be described in detail with reference to the accompanying drawings.

The present disclosure relates to a sidestream smoke removing device, and is intended to provide a sidestream smoke removing device including a smoking article detection part configured to detect a smoking article suitable for the sidestream smoke removing device. Thus, a sidestream smoke removing device according to an embodiment of the present disclosure is activated only when a suitable smoking article is inserted into the sidestream smoke removing device so as not only to provide the functionality of the device to the maximum extent but also to have superior effects in terms of the durability and stability of the device. Herein, FIGS. 1 and 2 schematically illustrating an example sidestream smoke removing device are provided for a better understanding of the sidestream smoke removing device. According to an embodiment of the present disclosure, the sidestream smoke removing device 1 includes a housing 11, an article inserting part 12, a sidestream smoke processing part 16, and an article detection part 22. The sidestream smoke removing device 1 may further include a back cover 13, a heat insulating part 14, an ignition part 15, a mesh part 17, a control part 18, a display part 19, a temperature sensor 20, and an elastic support part 21. In addition to these components, universal components commonly known to those skilled in the art to which the present disclosure pertains may be further included. For example, the sidestream smoke removing device 1 may further include a battery (not shown) to provide power to electrical components (e.g., the control part 18, the display part 19, etc.). In addition, some of the components illustrated in FIG. 1 may not be essential components of the sidestream smoke removing device 1. That is, the sidestream smoke removing device 1 may be configured such that some of the illustrated components are omitted. For example, the sidestream smoke removing device 1 may be configured such that some components, such as the temperature sensor 20 and the display part 19, are omitted. Hereinafter, respective components of the sidestream smoke removing device 1 will be described.

The housing 11 may define a smoking space within the sidestream smoke removing device 1, and define at least a portion of the exterior of the sidestream smoke removing device 1. Although the housing 11 is illustrated as designating a sidewall of the sidestream smoke removing device 1 in FIG. 1, the housing 11 may designate the entirety of an exterior-forming structure including the article inserting part 12, the back cover 13, and the heat insulating part 14. The housing 11 may be formed of a strong material in order to provide the durability of the sidestream smoke removing device 1 and reduce the possibility of damage of the sidestream smoke removing device 1.

According to an embodiment of the present disclosure, the housing 11 may have a vent hole A through which air may smoothly enter the smoking space. The vent hole A may promote combustion of the smoking article 2 by allowing air to enter during smoking, whereby smoking performance of the sidestream smoke removing device 1 may be significantly improved. Although FIG. 1 illustrates a single vent hole A formed in the housing 11 as an example, a plurality of vent holes A may be provided. In addition, the positions, sizes, distances, and the like of the vent holes A may be variously designed. Whether the vent hole A is opened or closed and/or the degree of opening/closing of the vent hole A may be controlled by the control part 18.

The article inserting part 12 may be located on one end (e.g., a downstream side) of the housing 11, and have an open area through which the smoking article 2 is to be inserted. A user may insert the smoking article 2 into the smoking space in the sidestream smoke removing device 1 through the article inserting part 12. In order to block heat from dissipating from inside the smoking space, the article inserting part 12 may be formed of a heat insulating material. In addition, in order to prevent the inserted smoking article 2 from shaking, the article inserting part 12 may have a holder structure capable of holding the smoking article 2.

According to an embodiment of the present disclosure, the article inserting part 12 may have a size-adjustable structure. For example, the article inserting part 12 may have a structure by which the open area may be tightened or loosely expanded by a manual operation. In another example, the article inserting part 12 may be configured to automatically tighten the open area to be compliant with the smoking article 2. In a more specific example, the article inserting part 12 is controlled by the control part 18. When the control part 18 detects the smoking article 2 being inserted using a sensor or a user input (e.g., performed by pushing a button) is received, the control part 18 may control the article inserting part 12 to reduce the open area. According to an embodiment of the present disclosure, as the size of the open area is adjusted to be compliant with the smoking article 2, shaking of the smoking article 2 may be prevented and support stability of the smoking article 2 may be improved. Furthermore, a variety of sizes of smoking articles 2 may be inserted into the sidestream smoke removing device 1, and thus the usability of the sidestream smoke removing device 1 may be improved.

Herein, FIG. 3 schematically illustrating an example smoking article is provided for a better understanding of the sidestream smoke removing device. The smoking article 2 may include a filter portion 32 located upstream and a smoking material portion 33 in contact with an upstream end of the filter portion. Here, the specific structure of the smoking article 2 may be variously changed. The filter portion 32 may include a filter material capable of filtering smoke, and the smoking material portion 33 may include a smoking material. An example of the smoking article 2 may be, but is not limited to, a combusting cigarette. The smoking article 2 may include any article that produces sidestream smoke during smoking. The filter portion 32 includes a filter wrap 34 surrounding the filter portion 32, and the smoking material portion 33 includes a cigarette paper 35 surrounding the smoking material portion 33. The filter portion 32 and the smoking material portion 33 may be connected through a tip paper 36.

The smoking article 2 may include one or more low flammability coating portions 31 inside the cigarette paper 35 surrounding the smoking material. A coating composition may be applied to the low flammability coating portions 31 to lower the porosity of the cigarette paper 35. Thus, when the combustion of the smoking article 2 reaches the low flammability coating portions 31, the amount of oxygen entering the smoking material portion 33 may be reduced, so that combustion of the smoking article 2 may be extinguished.

Although illustrated as single layers in FIG. 3, the low flammability coating portions 31 may have the shape of bands, but are not limited thereto. The shape of the low flammability coating portions 31 may vary according to embodiments. Furthermore, the number, thicknesses, and shapes of the low flammability coating portions 31 may be variously changed. The distances between the plurality of low flammability coating portions 31 may be variously changed.

For example, two low flammability coating portions 31A and 31B may be disposed for each smoking article 2, in positions between 17 mm from the distal end of the smoking material portion 33 and 12 mm from the filter portion 32, by applying the coating composition to the cigarette paper 35 having a porosity of 10 cu to 100 cu. The distance between the low flammability coating portions 31A and 31B may be set to have a width of 5 mm to 10 mm. In addition, for example, the porosity of the cigarette paper 35 may be between 10 cu and 100 cu. The porosity of the low flammability coating portions 31 may be between 3 cu and 20 cu. The thickness of the base paper of the cigarette paper 35 may be between 30 $\mu$m and 100 $\mu$m. The basis weight of the base paper may be between 15 g/m$^2$ and 80 g/m$^2$. The thickness of the low flammability coating portions 3 may be between 110 $\mu$m and 50 $\mu$m. The basis weight of the low flammability coating portions 31 may be 15 g/m$^2$ or less. The weight ratio of the coating composition with respect to the total weight of the cigarette paper 35 and the coating composition may be 40% or less. In addition, for example, when the low flammability coating portions 31 have the shape of bands, the weight of the coating composition of each band may be 2.5 mg or less.

According to an embodiment of the present disclosure, as illustrated in FIGS. 1 to 4, two or more low flammability coating portions 31A and 31B may be provided on the cigarette paper 35. As a more specific example, the first low flammability coating portions 31A may be provided in a cigarette paper area corresponding to a first segment of the smoking material portion 33, and the second low flammability coating portions coating portions 31B may be provided in a cigarette paper area corresponding to a second segment of the smoking material portion 33. Here, the first segment may be a segment positioned within a predetermined distance from one end (i.e., the downstream end) adjacent to the filter portion 32 of both ends of the smoking material portion 33, and may be a segment that is reached when smoking of the smoking article is completed. In addition, the second segment is positioned farther than the first segment, and may be a segment in which the smoking material is combusted. In this case, the second low flammability coating portions 31B serve to lower the possibility of fire when the smoking article 2 is thrown away in a state in which only a portion of the smoking material portion 33 is combusted. The first low flammability coating portions 31A may serve to guarantee a self-extinguishing function after smoking is finished. However, in some cases, the second low flammability coating portions 31B may block pores in the cigarette paper 35, thereby degrading combustibility and the taste of tobacco.

In order to overcome such problems, according to an embodiment of the present disclosure, the first low flammability coating portions 31A and the second low flammability coating portions 31B may be designed to be different from each other in at least one of basis weight, thickness, size, number, coating composition amount, and coating composition viscosity. For example, the second low flammability coating portions 31B may have a lower basis weight, a lower thickness, or a smaller size. As a more specific example, the basis weight of the first low flammability coating portions 31A may range from 2.6 $g/m^2$ to 5.5 $g/m^2$, and the basis weight of the second low flammability coating portions 31B may range 0.5 $g/m^2$ from to 2.5 $g/m^2$. Here, the basis weight of the low flammability coating portions 31 is only the basis weight of a coating layer formed by application of the coating composition, and may indicate a value corresponding to the difference between the basis weight of the coating layer and the base paper and the basis weight of the base paper. As another example, the number of the second low flammability coating portions 31B (e.g., the number of bands) may be smaller or the amount of the coating composition of the second low flammability coating portions 31B may be smaller. As another example, the coating composition of the second low flammability coating portions 31B may have a lower viscosity. This is because the lower the viscosity of the coating composition, the smaller the performance of blocking pores may be.

A combustion accelerator may be applied to areas of the cigarette paper on which the second low flammability coating portions 31B are provided and an area of the cigarette paper corresponding to the second segment. In this manner, combustibility may be prevented from decreasing even in a position adjacent to the second low flammability coating portions 31B. Examples of the combustion accelerator may include alkali metal salts, alkaline earth metal salts, and mixtures thereof. More specific examples of the combustion accelerator may include, but are not limited to, carboxylate, acetate, citrate, malate, lactate, tartrate, carbonate, formate, propionate, glycolate, fumarate, oxalate, malonate, succinate, nitrate, phosphorate, and mixtures thereof, as well as potassium satrate, sodium citrate, potassium succinate, sodium succinate, and mixtures thereof.

According to an embodiment of the present disclosure, combustibility and the taste of tobacco in smoking may be guaranteed by lowering low flammability performance of the second low flammability coating portions 31B. Furthermore, enhancing low flammability performance of the first low flammability coating portions 31A may guarantee self-extinguishment at a time point when smoking is finished.

According to an embodiment of the present disclosure, the coating composition may include Arabic gum, water, and fructo-oligosaccharide. According to another embodiment of the present disclosure, the coating composition may include Arabic gum, water, and galacto-oligosaccharide. According to another embodiment of the present disclosure, the coating composition may include Arabic gum, water, fructo-oligosaccharide, and galacto-oligosaccharide. Hereinafter, respective components of the coating composition will be described.

Arabic gum may be manufactured by drying and desalting Arabic gum tree sap. Arabic gum may block pores in the cigarette paper 35 to block the supply of oxygen, thereby realizing low flammability performance of the coating composition. Arabic gum may have a relatively low viscosity at a high concentration, thereby facilitating concentration adjustment at a low viscosity state. Thus, the coating composition having high-viscosity and high-concentration characteristics may be manufactured, and combustion strength may be easily controlled by adjusting coating concentration of the coating composition.

Arabic gum may have high solubility with water to improve dispersion stability of the coating composition to improve dispersion stability of the coating composition, thereby leading to formation of the low flammability coating portions 31 having uniform composition and concentration. In addition, the coating composition including Arabic gum has a higher drying speed at a high temperature than the related-art coating composition, and thus may improve the workability of a coating (application) process. Arabic gum may reduce aging, and thus availability time, storage time, viscosity retention time, or lifetime of the coating composition including Arabic gum may be increased compared to that of the related-art coating composition including alpha starch. In addition, in a dynamic situation in which a coating roller operates, the dynamic viscosity retention rate may be improved. Viscosity change that may occur in a low temperature situation of about 2°C may be significantly reduced. In addition, the performance of the coating composition in high temperature conditions may be maintained due to superior heat resistance. When combusted in the drying process, the occurrence of odor may be reduced.

According to an embodiment of the present disclosure, the content of Arabic gum may range, by weight, from 10% to 30% of the total weight of the coating composition. In this range, dispersion stability and drying speed of the coating composition may be improved, thereby further improving workability of the coating process. Low viscosity retention time may be significantly increased, and viscosity retention rate may be significantly improved. In addition, aging may be reduced, thereby increasing lifetime.

Fructo-oligosaccharide may block pores in the cigarette paper 35 to block the supply of oxygen, thereby improving low flammability performance of the coating composition like Arabic gum. Since the average size of fructo-oligosaccharide is smaller than that of Arabic gum, fructo-oligosaccharide may block fine pores having smaller diameters or sizes, thereby improving low flammability performance of the coating composition. In addition, fructo-oligosaccharide has an effect of improving dispersion of the coating composition, due to small molecular weight thereof. Thus, the cigarette paper 35 may be uniformly coated with the coating composition, thereby improving the workability of the coating process and reducing manufacturing time of the coating process.

Fructo-oligosaccharide may effectively reduce the aging rate of Arabic gum and significantly reduce the aging rate of the coating composition. Thus, compared to the related-art coating composition including alpha starch, the viscosity retention time may be increased, the viscosity retention rate may be improved, and viscosity change may be minimized even when exposed to a low temperature of about 2°C. in addition, fructo-oligosaccharide may be dissolved with ethanol and, when used with ethanol, lower the viscosity of the coating composition and improve bonding force between components of the coating composition. In addition, the coating composition including fructo-oligosaccharide may have a higher drying rate at a high temperature than the coating composition of the related art. Thus, the coating composition according to an embodiment of the present disclosure may improve the workability of the coating process.

According to an embodiment of the present disclosure, the content of fructo-oligosaccharide may range, by weight, from 5% to 35% of the total weight of the coating composition. In this range, the low viscosity retention time may be significantly increased, the viscosity retention rate may be significantly improved, the lifetime may be increased due to significantly reduced aging, and the workability of the coating process may be improved.

Galacto-oligosaccharide may also be included in a weight percent similar to that of fructo-oligosaccharide, and may produce an effect similar to that of fructo-oligosaccharide. In order to exclude repetition, descriptions relating to galacto-oligosaccharide will be omitted.

Ethanol may increase the solid content of the coating composition. The viscosity of the coating composition may be adjusted by adjusting the content of ethanol. In addition, ethanol may reduce the surface tension of the coating composition, thereby improving the affinity between the coating roller and the coating composition in the coating process. Thus, the amount of coating may be increased and may be maintained uniformly, thereby improving the workability of coating. In addition, low flammability performance may be improved. In addition, ethanol may improve the drying ability of the coating composition and improve the drying rate at a high temperature, thereby improving the workability of the coating process. A phenomenon in which the cigarette paper is absorbed to water and the strength thereof is reduced may be prevented.

According to an embodiment of the present disclosure, the content of ethanol may range, by weight, from 15% to 30% of the total weight of the coating composition. In this range, the viscosity of the coating composition may be suitably maintained, the workability of the coating process may be further improved to improve the productivity of the smoking article. The low flammability performance of the smoking article may be further improved.

Water may be used to adjust the concentrations of other components or the concentration of the coating composition. In addition, water may improve the absorptiveness of the cigarette paper 35 to the coating composition.

The sidestream smoke processing part 16 is positioned at a distance from the upstream end of the smoking article 2 inserted into the smoking space, and may perform a variety of processing functions regarding sidestream smoke produced from the smoking article. For example, the sidestream smoke processing part 16 may be positioned between the inserted smoking article 2 and the back cover 13 to purify the sidestream smoke. In addition, the sidestream smoke processing part 16 may perform a ventilation function to facilitate discharge of the purified sidestream smoke. Here, the specific structure and the operating system of the sidestream smoke processing part 16 may be variously designed, and may vary according to the embodiment.

According to an embodiment of the present disclosure, as illustrated in FIG. 1, the sidestream smoke processing part 16 may include a filter 16A and a ventilation fan 16B. The filter 16A may perform a sidestream smoke purification function by filtering sidestream smoke, whereas the ventilation fan 16B may perform a sidestream smoke discharge function. For example, the ventilation fan 16B may be rotated to draw sidestream smoke toward the filter 16A and allow sidestream smoke that has passed through the filter 16A to be properly discharged. The operation of the ventilation fan 16B may be controlled by the control part 18.

The article detection part 22 detects the smoking article 2 inserted through the article inserting part 12 of the sidestream smoke removing device 1, thereby determining whether or not the smoking article 2 is suitable for the sidestream smoke removing device 1. In order to correctly detect the inserted smoking article 2, the article detection part 22 may be positioned to be adjacent to the smoking article 2 in the sidestream smoke removing device 1. According to an embodiment of the present disclosure, the article detection part 22 may be positioned adjacent to the smoking article 2 in the article inserting part 12, as illustrated in FIG. 1 and the like.

According to an embodiment of the present disclosure, the article detection part 22 detects the low flammability coating portions 31 of the smoking article 2. The low flammability coating portions 31 have the above-described functions. Although the low flammability coating portions 31 are not particularly introduced for detection of the smoking article 2, the low flammability coating portions 31 have a structure or a composition by which the smoking article 2 may be sufficiently identified. Thus, the low flammability coating portions 31 may be properly regarded as article indicators. Specifically, the article detection part 22 includes a physical or chemical sensor commonly known in the art to which the present disclosure pertains, which may evaluate the position, thickness, size, basis weight, pores, thermal conductivity, electric conductivity, chemical composition, etc. of the low flammability coating portions. According to an embodiment of the present disclosure, the chemical sensor may be implemented as an ion sensor. When the potential of an ion selective electrode is $E_I$, the potential of a reference electrode is $E_r$, and the potential of a contact portion between the reference electrode and a sample solution is $E_j$, E may be expressed by the following Equation 1:

$$[\text{Equation 1}]$$
$$E = E_I - E_r + E_j$$

The ion sensor is an electrode that selectively responds to a specific ion in a solution to be analyzed and generates a linear potential according to the concentration (activity) of the ion. The ion sensor obtains an ion concentration in a sample solution by measuring a potential difference occurring in a solid-liquid phase boundary or a liquid-liquid phase boundary.

According to an embodiment of the present disclosure, the low flammability coating portions 31 of the smoking article 2 suitable for the sidestream smoke removing device 1 characteristically contains Arabic gum. Thus, when the article detection part 22 detects the smoking article 2 on the basis of the physical or chemical properties of the low flammability coating portions 31 containing Arabic gum, the article detection part 22 may more accurately determine whether or not the smoking article 2 is suitable for the sidestream smoke removing device 1. Provided is a sensing method of measuring the application position of Arabic gum is and the potential difference occurring in the boundary between Arabic gum and the coating portion when the positions of the low flammability coating portions 31 in the smoking article 2 are constant. Although common gums are not properly dissolved at a concentration of 5% or higher, Arabic gum may be dissolved as long as the content thereof does not exceed 55%. In addition, Arabic gum has a spherical molecular shape, and thus the viscosity thereof is lower than those of linear gums that are commonly used. A component of Arabic gum is branched arabinogalactan in which β-D-galactopyranose is connected by 1-3 bond. As a main chain, two to four side chains, in each of which β-D-galactopyranose is connected by 1-3 bond, are connected by 1-6 bond. Guar gum has a main chain formed of β-D-mannopyranose connected by galactomannan 1-4 bond. A single unit of α-D-galactose is connected to a main chain unit of about 56% by 1-6 bond. Thus, the corresponding material may be sensed on the basis of the difference between gum materials, the difference between viscosities, and uniform application in position.

The physical or chemical properties of the low flammability coating portions 31 containing Arabic gum may include not only component properties of Arabic gum that is a polymer mixture of glycoprotein and polysaccharide but also physical properties, such as transmittance and conductivity, of the low flammability coating portions 31 containing Arabic gum.

In the sidestream smoke removing device 1, the article detection part 22 may work in concert with the control part 18 so as to drive related components according to the result of the article detection by the article detection part 22. According to an embodiment of the present disclosure, when the article detection part 22 detects the smoking article 2 suitable for the sidestream smoke removing device 1, the control part 18 controls the ignition part 15 to ignite the smoking article 2. In this regard, when the smoking article 2 is ignited by the ignition part 15, the sidestream smoke removing device 1 may be controlled to operate the ventilation fan 16B by detecting the sidestream smoke produced by the smoking article 2.

The back cover 13 is positioned on the other end (e.g., the upstream end) of the housing 11, and may serve as a cover for the sidestream smoke removing device 1. The back cover 13 may have gas discharge passages through which the sidestream smoke processed (purified) through the sidestream smoke processing part 16 may be discharged. For example, the back cover 13 may be provided with gas discharge passages, such as fine holes.

The heat insulating part 14 may be formed of a low heat conductivity material to block heat from being discharged from inside the smoking space. Since the heat insulating part 14 is disposed on the outer surface of the housing 11, the heat insulating part 14 may prevent a risk of burn due to internal heat of the sidestream smoke removing device 1 when a body portion of the user is in contact with the sidestream smoke removing device 1 (e.g., when the user holds the sidestream smoke removing device 1 to smoke).

The temperature sensor 20 may be disposed within the smoking space to measure the temperature of the smoking article 30 inserted into the smoking space. The number, shape, disposed position, disposed distances, and the like of the temperature sensor 20 may be variously designed and may differ depending on the embodiment.

According to an embodiment of the present disclosure, as illustrated in FIG. 1, the temperature sensor 20 may be disposed to measure a temperature near the downstream end of the smoking material part. In this case, whether or not smoking is finished may be accurately determined only using the temperature sensor 20 without an additional monitoring module. This may be understood considering that smoking is generally finished when the smoking material is completely combusted. For example, when the temperature measured by the temperature sensor 20 is equal to or higher than a reference temperature (e.g., a smoking position has currently reached the downstream end of the smoking material) or when the temperature measured by the temperature sensor 20 is reduced to be equal to or lower than the reference temperature after having increased (e.g., combustion heat is reduced at the downstream end of the smoking material), the control part 18 may determine that smoking is finished.

According to an embodiment of the present disclosure, a plurality of temperature sensors 20 may be disposed in different positions within the smoking space. A plurality of temperature sensors 20 may be disposed in the longitudinal direction of the smoking article 30. Alternatively, the plurality of temperature sensor 20 may be disposed in positions opposite to each other. Here, the distances between the temperature sensors 20 may be the same or different. When the plurality of temperature sensors 20 are used, smoking progress (e.g., the degree of progress of smoking) may be more accurately monitored, and a variety of pieces of monitoring information to be described below may be obtained.

According to an embodiment of the present disclosure, starting of smoking may be detected (determined) by a temperature sensor disposed adjacent to the upstream end of the smoking material part. For example, the control part 18 may determine that smoking has started when the temperature measured by the temperature sensor is equal to or higher than the reference temperature. According to an embodiment of the present disclosure, the degree of progress of smoking (e.g., a position of current smoking (or combustion)) of the smoking article 2 may be determined by comparing temperatures measured by a plurality of temperature sensors disposed in the longitudinal direction of the smoking article.

According to an embodiment of the present disclosure, the plurality of temperature sensors 20 may be disposed in positions opposite to each other with respect to the inserted smoking article 2 or in the circumferential direction of the smoking article 2 within the smoking space (e.g., four temperature sensors 20 may be disposed at 90° intervals). In this case, the degree of tilting (shaking) of the smoking article 2 may be determined by comparing temperatures measured by the plurality of temperature sensors 20. For example, when the temperature measured by a specific temperature sensor is higher than the temperatures measured by the other temperature sensors, the control part 18 may determine that the inserted smoking article 2 is tilted in the direction of the specific temperature sensor. Alternatively, when temperatures measured by the plurality of temperature sensors 20 change to be equal to or higher than the reference temperature, the control part 18 may determine that the inserted smoking article 2 is shaking.

According to an embodiment of the present disclosure, the temperature sensor 20 having an elongated body may be disposed within the smoking space. For example, the elongated temperature sensor 20 may be disposed in the longitudinal direction of the smoking article 2. According to an embodiment of the present disclosure, the temperature sensor 20 may be configured such that a first portion of the elongated body measures the temperature of a first corresponding portion of the smoking material part of the smoking article 2 and a second portion of the elongated body measures the temperature of a second corresponding portion of the smoking material part of the smoking article 2. The temperature sensor may be specifically configured in any manner. In this case, the progress of smoking may be monitored on the basis of the temperature measured by the specific portion of the elongated body. For example, the control part 18 may determine the degree of progress of smoking of the smoking article 2 by measuring temperatures measured by respective portions of the elongated body.

According to an embodiment of the present disclosure, the temperature sensor(s) 20 may be disposed on the basis of a combination of the above-described embodiments.

The ignition part 15 may be disposed within the smoking space to ignite the smoking article 2 inserted into the smoking space. The ignition part 15 may be controlled by the control part 18 and may perform an ignition function in response to a manual operation of the user. The number, shape, disposed position, and the like of the ignition parts 15 may be variously designed and may differ depending on the embodiment.

According to an embodiment of the present disclosure, the ignition part 15 may be disposed in fixed positions. Specifically, the ignition part 15 may be disposed to ignite the upstream end or a portion adjacent to the upstream end of the inserted smoking article 2. In this case, the structure of the sidestream smoke removing device 1 may be simplified, thereby minimizing the defect rate of manufacturing.

According to an embodiment of the present disclosure, the ignition part 15 may be designed and configured to be movable. The ignition part 15 may be specifically configured in any manner. For example, the ignition part 15 may be configured to move in the longitudinal direction by manual operation of the user or under the control of the control part 18. In an embodiment of the present disclosure, the control part 18 may move the ignition part 15 toward the upstream end of the smoking article 2 in response to the smoking article 2 being detected. In this case, the sidestream smoke removing device 1 may be universally applied to the smoking articles 2 having a variety of lengths, thereby significantly improving the usability of the sidestream smoke removing device 1.

As illustrated in, for example, FIG. 1, the elastic support part 21 may be disposed to elastically support the upstream end of the inserted smoking article 2. The elastic support part 21 may include an elastic material, such as a spring, capable of stretching and contracting, and may be disposed to contract in the insertion direction of the smoking article 2 in response to the smoking article 2 being inserted. For example, the elastic support part 21 may be disposed in the longitudinal direction within the smoking space to be compressed by inserting force of the smoking article 2, thereby supporting the smoking article 30. Consequently, support stability and ignition stability of the smoking article 2 may be improved.

The ignition part 15 and the elastic support part 21 may be variously designed to be coupled to each other or not and/or to have a variety of arrangements. According to an embodiment of the present disclosure, as illustrated in FIG. 1, the ignition part 15 is coupled to the elastic support part 21. The ignition part 15 may be disposed to be in close contact with the upstream end of the smoking article 2 as the smoking article 2 is inserted. In this case, since the ignition part 15 performs the ignition function while supporting the upstream end of the smoking article 2 together with the elastic support part 21, ignition stability may be further improved. Furthermore, since the ignition part 15 performs the ignition while being in close contact with the upstream end of the smoking article 2, ignition performance may also be improved.

A portion of the ignition part 15 in close contact with the upstream end of the smoking article 2 may have a sharp protruding shape (e.g., a needle shape). In this case, the ignition part 15 extends through the upstream end of the smoking article 2 as the smoking article 2 is inserted. Thus, the smoking article 2 may be more strongly supported in ignition. Consequently, both support stability and ignition stability of the sidestream smoke removing device 1 may be further improved. In another embodiment of the present disclosure, the ignition part 15 may be disposed in a position different from the elastic support part 21, and the ignition part 15 may be configured to be movable. In this case, the smoking article 2 may be supported through the elastic support part 21, and the ignition part 15 may be manually or automatically moved toward the upstream end of the smoking article 30 to perform the ignition function.

Although not shown in this specification, the sidestream smoke removing device 1 may be provided with a structure configured to prevent the elastic support part 21 from stretching again due to elasticity after being compressed by the insertion of the smoking article 2. The structure may be configured in any manner.

The elastic support part 21 may be configured in association with the article detection part 22, since the elastic support part 21 may determine the position of the smoking article 2 inserted into the sidestream smoke removing device 1. When the smoking article 2 is inserted into the sidestream smoke removing device 1, the smoking article 2 may be in contact with the ignition part 15 coupled to the elastic support part 21 as illustrated in FIG. 1. Afterward, when the smoking article 2 is further inserted, the elastic support part 21 is compressed. According to an embodiment of the present disclosure, the sidestream smoke removing device 1 may be designed such that, when the ignition part 15 is first contacted with the upstream end of the smoking article 2, the low flammability coating portions 31 of the smoking article 2 are positioned in the open area of the article inserting part 12. When the sidestream smoke removing device 1 is designed in this manner, the article detection part 22 may detect the smoking article in a state in which the position of the low flammability coating portions 31 serving as a detection target is clearly specified, and the smoking article 2 may be stopped at the moment the smoking article 2 touches the ignition part 15. Thus, the functionality of the article detection part 22 may be improved. According to an embodiment of the present disclosure, when the ignition part 15 is first contacted with the upstream end of the smoking article 2, the article detection part 22 detects an adjacent portion of the smoking article 2. In this case, a time point at which the article detection part 22 is to be driven may be clearly specified, thereby improving the reliability of the article detection part 22.

As described above, as illustrated in FIGS. 1 to 4, the low flammability coating portions 31 may include the first low flammability coating portions 31A and the second low flammability coating portions 31B spaced apart from each other in the longitudinal direction of the smoking article 2. According to an embodiment of the present disclosure, the sidestream smoke removing device 1 includes a first article detector 22A and a second article detector 22B corresponding to the first low flammability coating portions 31A and the second low flammability coating portions 31B, respectively. The first article detector may be positioned on the article inserting part to be adjacent to the smoking article, whereas the second article detector may be positioned within the housing and spaced apart from the first article detector in the longitudinal direction by a distance equal to the distance by which the first low flammability coating portions are spaced apart from the second low flammability coating portions. According to an embodiment of the present disclosure, in the sidestream smoke removing device, the first article detector and the second article detector may be positioned to be spaced apart from each other in the longitudinal direction by a distance of 5 mm to 10 mm.

According to an embodiment of the present disclosure, when the smoking article is inserted, the sidestream smoke removing device may detect the smoking article to be suitable for the sidestream smoke removing device when the first low flammability coating portions and the second low flammability coating portions of the smoking article are simultaneously detected by the first article detector and the second article detector, respectively. When both the first article detector 22A capable of detecting the first low flammability coating portions 31A and the second article detector 22B capable of detecting the second low flammability coating portions 31B are included, the reliability of the article detection part 22 may be improved, since one or more parameters related to detection may be further included. When two or more article detection parts 22 are included, the reliability of the article detection parts 22 may be improved. Thus, the elastic support part 21 as a means for improving the reliability of the article detection parts 22 may not be separately required.

In this specification, FIGS. 1, 2, and 4 schematically illustrating the sidestream smoke removing device 1 into which the smoking article 2 is inserted are provided for a better understanding of the positional relationship between the article detection part 22 of the sidestream smoke removing device 1 and the low flammability coating portions 31 of the smoking article 2. FIG. 1 illustrates the positional relationship between the article detection part 22 and the low flammability coating portions 31 when the ignition part 15 coupled to the elastic support part 21 is first contacted with the inserted smoking article 2. FIG. 2 illustrates the positional relationship between the article detection part 22 and the low flammability coating portions 31 when the smoking article 2 is compressed to the maximum extent in response to the elastic support part 21 being compressed to the maximum extent. FIG. 4 illustrates the positional relationship between the article detection part 22 and the low flammability coating portions 31 when the ignition part 15 coupled to the elastic support part 21 in the sidestream smoke removing device including the first article detector 22A capable of detecting the first low flammability coating portions 31A and the second article detector 22B capable of detecting the second low flammability coating portions 31B is first contacted with the inserted smoking article 2.

The mesh part 17 may be disposed between the sidestream smoke processing part 16 and the back cover 13 to serve as a safety net. For example, the mesh part 17 may prevent a specific object (e.g., a fragment of the filter 16A) within the smoking space from moving toward the back cover 13.

The display part 19 may be on the outer surface of the housing 11 to display a variety pieces of information under the control of the control part 18. For example, the display part 19 may display information regarding the smoking progress, information regarding the device, smoking history information, information regarding the user, etc. Here, the information regarding the smoking progress may include information regarding the progress of smoking (e.g., all pieces of information regarding the progress of smoking, such as the degree of progress of smoking, the current position of smoking, the remaining number of puffs, a smoking time, a remaining smoking time, etc.) and puff information (e.g., all pieces of information regarding puff events, such as the number of puffs, the length of puff, the interval of puff, the strength of puff, whether or not the user is puffing, etc.), but is not limited thereto. The device may include information, such as power state, malfunction, a battery state (e.g., the state of charge of the battery, the necessity to charge, etc.), but is not limited thereto. The smoking history information may include the cumulative number of cigarettes smoked, etc., but is not limited thereto.

The display part 19 may visually display various types of information by including a visual display means, such as a light-emitting diode (LED) display. Here, a specific form of the display means may be variously modified.

The control part 18 may control the overall operation of the sidestream smoke removing device 1. For example, the control part 18 may control the operation of the ventilation fan 16B, the operation of the display part 19, or the operation of other components of the sidestream smoke removing device 1. In addition, the control part 18 may review the smoking progress of the smoking article 2. The control part 18 may determine whether or not the sidestream smoke removing device 1 is able to operate by reviewing the state of each of the components of the sidestream smoke removing device 1.

The control part 18 may be implemented as at least one processors. The processor may be implemented as an array of a plurality of logic gates, or a combination of a universal microprocessor and a memory in which a program executable by the microprocessor is stored. In addition, it will be apparent to those skilled in the art to which the present disclosure pertains that the control part 18 may be implemented as another type of hardware.

Although the control part 18 is illustrated as being positioned outside the housing 11 of the sidestream smoke removing device 1 in FIG. 1, this is only for the sake of brevity, and the control part 18 may be disposed in a variety of other positions. For example, the control part 18 may be disposed in a specific position within the housing 11.

In addition, in an embodiment of the present disclosure, the sidestream smoke removing device 1 may further include a module configured to provide audible and/or tactile outputs. For example, the sidestream smoke removing device 1 may further include a speaker, a vibration module, and the like. In this case, the control part 18 may provide various types of information to the user using the above-described module(s).

In addition, in an embodiment of the present disclosure, a cutting part may further be disposed within the smoking space. The cutting part may cut the smoking article 2 during combustion to prevent further combustion. In this manner, it is possible to provide a safe extinguishing function at a time point desired by the user and minimize a risk of burn that may occur due to the carelessness of the user (e.g., a risk of burn that may occur due to carelessness when the user extinguishes by him/herself) and a danger of fire. Here, the cutting part may be variously implemented and designed.

According to an embodiment of the present disclosure, the cutting part may be disposed in a fixed position and configured to cut a specific portion of the inserted smoking article 2. For example, the cutting part may be fixedly disposed in a position at which the filter 16A and the smoking material part are cut apart from each other. In this case, it is possible to guarantee a safe extinguishing function irrespective of the current smoking (combustion) position of the smoking article 2 and simplify the structure of the sidestream smoke removing device 1.

According to an embodiment of the present disclosure, the cutting part may be configured to be movable. For example, the cutting part may be configured to be moved by external force (e.g., a manual operation) of the user and configured to be moved under the control of the control part 18. As a more specific example, the cutting part may be automatically moved to a position adjacent to the current smoking (combustion) position of the smoking article 2 by the control part 18.

According to an embodiment of the present disclosure, the cutting part may be operated by the user by pressing a push button provided on the exterior of the housing 11, twisting the housing 11, stretching or compressing the housing 11 in the longitudinal direction, etc. The cutting part may have a structure mechanically cooperating with the housing 11 so as to perform the illustrated operations, or may be implemented such that the control part 18 operates the cutting part according to the illustrated operations.

According to an embodiment of the present disclosure, the sidestream smoke removing device 1 may include one or more support portions capable of supporting a side surface of the inserted smoking article 2 so that the smoking article 2 inserted into the sidestream smoke removing device 1 may be stably supported.

**Reference Numerals of Drawings**

1: sidestream smoke removing device
2: smoking article
11: housing
12: article inserting part
13: back cover
14: heat insulating part
15: ignition part
16: sidestream smoke processing part
16A: filter
16B: ventilation fan
17: mesh part
18: control part

19: display part
20: temperature sensor
21: elastic support part
22: article detection part
22A: first article detector
22B: second article detector
31: low flammability coating portions
31A: first low flammability coating portions
31B: second low flammability coating portions
32: filter portion
33: smoking material part
34: filter wrap
35: cigarette paper
36: tip paper
A: vent hole

**Claims**

1. A sidestream smoke removing device (1) comprising:

   a housing (11) having a smoking space defined therein;
   an article inserting part (12) positioned on one end of the housing (11) and having an open area through which a smoking article (2) is inserted into the smoking space;
   a sidestream smoke processing part (16) positioned at a distance from an upstream end of the smoking article (2) inserted into the smoking space and configured to process sidestream smoke produced from the smoking article (2); and
   an article detection part (22) positioned in the article inserting part (12) to be adjacent to the smoking article (2) so as to detect the smoking article (2) inserted into the article inserting part (12),
   **characterized in that** the smoking article (2) comprises low flammability coating portions (31, 31A, 31B) within a cigarette paper surrounding the smoking material, and
   the article detection part (22) is configured to detect the low flammability coating portions (31, 31A, 31B) of the smoking article (2).

2. The sidestream smoke removing device (1) according to claim 1, further comprising a control part (18) configured to control overall operations of the sidestream smoke removing device (1),
   wherein a result of the detection of the smoking article (2) by the article detection part (22) is transferred to the control part (18).

3. The sidestream smoke removing device (1) according to claim 1, wherein the low flammability coating portions (31, 31A, 31B) of the smoking article (2) contains Arabic gum.

4. The sidestream smoke removing device (1) according to claim 1, wherein the sidestream smoke removing device (1) further comprises an ignition part (15) positioned within the housing (11) and configured to ignite the smoking article (2) inserted into the smoking space,
wherein the ignition part (15) ignites the smoking article (2) when the smoking article (2) is detected by the article detection part (22) to be suitable for the sidestream smoke removing device (1).

5. The sidestream smoke removing device (1) according to claim 1, wherein the sidestream smoke processing part (16) comprises:

a filter (16A) configured to filter the sidestream smoke; and
a ventilation fan (16B) through which the sidestream smoke is discharged,
wherein the ventilation fan (16B) is operated by detecting the sidestream smoke produced from the smoking article (2).

6. The sidestream smoke removing device (1) according to claim 4, further comprising an elastic support part (21) disposed to elastically support an upstream end of the smoking article (2) as the smoking article (2) is inserted through the article inserting part (12),

wherein the ignition part (15) is coupled to the elastic support part (21) and is disposed to be in contact with the upstream end of the smoking article (2) as the smoking article (2) is inserted, and
when the ignition part (15) is first contacted with the upstream end of the smoking article (2), the low flammability coating portions (31, 31A, 31B) of the smoking article (2) are positioned in the open area of the article inserting part (12).

7. The sidestream smoke removing device (1) according to claim 6, wherein, when the ignition part (15) is first contacted with the upstream end of the smoking article (2), the article detection part (22) detects an adjacent portion of the smoking article (2).

8. A sidestream smoke removing system comprising the sidestream smoke removing device (1) according to claim 1 and a smoking article (2), wherein the smoking article (2) comprises first low flammability coating portions (31A) and second low flammability coating portions (31B) spaced apart from the first low flammability coating portions (31A) in a longitudinal direction of the smoking article (2),

the sidestream smoke removing device (1) further comprising a first article detector (22A) and a second article detector (22B),
wherein the first article detector (22A) is positioned in the article inserting part (12) to be adjacent to the smoking article (2), and the second article detector (22B) is positioned within the housing (11) and spaced apart from the first article detector (22A) in the longitudinal direction by a distance equal to a distance by which the first low flammability coating portions (31A) are spaced apart from the second low flammability coating portions (31B).

9. The sidestream smoke removing system according to claim 8, wherein, when the smoking article (2) is inserted, the sidestream smoke removing device (1) detects the smoking article (2) to be suitable for the sidestream smoke removing device (1) when the first low flammability coating portions (31A) and the second low flammability coating portions (31B) of the smoking article (2) are simultaneously detected by the first article detector (22A) and the second article detector (22B), respectively.

10. The sidestream smoke removing system according to claim 8, wherein the first article detector (22A) and the second article detector (22B) are spaced apart from each other in a longitudinal direction of the sidestream smoke removing device (1) by a distance of 5 mm to 10 mm.

**Patentansprüche**

1. Vorrichtung (1) zum Entfernen von Nebenstromrauch, die Folgendes umfasst:

ein Gehäuse (11), das einen darin definierten Rauchraum aufweist;
ein Artikeleinsetzteil (12), das an einem Ende des Gehäuses (11) positioniert ist und einen offenen Bereich hat, durch den ein Rauchartikel (2) in den Rauchraum eingesetzt wird;
ein Teil (16) zum Verarbeiten von Nebenstromrauch, das in einem Abstand von einem stromaufwärts liegenden Ende des Rauchartikels (2), der in den Rauchraum eingesetzt ist, positioniert ist, und das konfiguriert ist, Nebenstromrauch, der vom Rauchartikel (2) erzeugt wird, zu verarbeiten; und
ein Artikeldetektionsteil (22), das so im Artikeleinsetzteil (12) positioniert ist, dass es an den Rauchartikel (2) angrenzt, um den Rauchartikel (2), der in das Artikeleinsetzteil (12) eingesetzt ist, zu detektieren,
**dadurch gekennzeichnet, dass**
der Rauchartikel (2) Abschnitte (31, 31A, 31B) mit einer schwer entflammbaren Beschichtung in einem Zigarettenpapier, das den Rauchartikel umgibt, umfasst, und das Artikeldetektionsteil (22) konfiguriert ist, die Abschnitte (31, 31A, 31B) des Rauchartikels (2) mit einer schwer entflammbaren Beschichtung zu detektieren.

2. Vorrichtung (1) zum Entfernen von Nebenstromrauch nach Anspruch 1, die ferner ein Steuerteil (18) umfasst, das konfiguriert ist, den Gesamtbetrieb der Vorrichtung (1) zum Entfernen von Nebenstromrauch zu steuern, wobei ein Ergebnis der Detektion des Rauchartikels (2) durch das Artikeldetektionsteil (22) an das Steuerteil (18) übertragen wird.

3. Vorrichtung (1) zum Entfernen von Nebenstromrauch nach Anspruch 1, wobei die Abschnitte (31, 31A, 31B) des Rauchartikels (2) mit einer schwer entflammbaren Beschichtung Gummiarabikum enthalten.

4. Vorrichtung (1) zum Entfernen von Nebenstromrauch nach Anspruch 1, wobei die Vorrichtung (1) zum Entfernen von Nebenstromrauch ferner ein Zündteil (15) umfasst, das im Gehäuse (11) positioniert ist und konfiguriert ist, den Rauchartikel (2), der in den Rauchraum eingesetzt ist, zu entzünden, wobei das Zündteil (15) den Rauchartikel (2) entzündet, wenn durch das Artikeldetektionsteil (22) detektiert wird, dass der Rauchartikel (2) für die Vorrichtung (1) zum Entfernen von Nebenstromrauch geeignet ist.

5. Vorrichtung (1) zum Entfernen von Nebenstromrauch nach Anspruch 1, wobei das Teil (16) zum Verarbeiten von Nebenstromrauch Folgendes umfasst:

   einen Filter (16A), der konfiguriert ist, den Nebenstromrauch zu filtern; und ein Gebläse (16B), durch das der Nebenstromrauch abgeführt wird, wobei das Gebläse (16B) durch Detektieren des Nebenstromrauchs, der vom Rauchartikel (2) erzeugt wird, betrieben wird.

6. Vorrichtung (1) zum Entfernen von Nebenstromrauch nach Anspruch 4, die ferner ein elastisches Stützteil (21) umfasst, das so angeordnet ist, dass es ein stromaufwärts liegendes Ende des Rauchartikels (2) elastisch stützt, wenn der Rauchartikel (2) durch das Artikeleinsetzteil (12) eingesetzt wird,

   wobei das Zündteil (15) mit dem elastischen Stützteil (21) gekoppelt ist und so angeordnet ist, dass es mit dem stromaufwärts liegenden Ende des Rauchartikels (2) in Kontakt ist, wenn der Rauchartikel (2) eingesetzt ist, und dann, wenn das Zündteil (15) erstmals mit dem stromaufwärts liegenden Ende des Rauchartikels (2) in Kontakt ist, die Abschnitte (31, 31A, 31B) des Rauchartikels (2) mit einer schwer entflammbaren Beschichtung im offenen Bereich des Artikeleinsetzteils (12) positioniert sind.

7. Vorrichtung (1) zum Entfernen von Nebenstromrauch nach Anspruch 6, wobei dann, wenn das Zündteil (15) in einem ersten Kontakt mit dem stromaufwärts liegenden Ende des Rauchartikels (2) ist, das Artikeldetektionsteil (22) einen angrenzenden Abschnitt des Rauchartikels (2) detektiert.

8. System zum Entfernen von Nebenstromrauch, das die Vorrichtung (1) zum Entfernen von Nebenstromrauch nach Anspruch 1 und einen Rauchartikel (2) umfasst, wobei der Rauchartikel (2) erste Abschnitte (31A) mit einer schwer entflammbaren Beschichtung und zweite Abschnitte (31B) mit einer schwer entflammbaren Beschichtung, die von den ersten Abschnitten (31A) mit einer schwer entflammbaren Beschichtung in der Längsrichtung des Rauchartikels (2) beabstandet sind, umfasst,

   wobei die Vorrichtung (1) zum Entfernen von Nebenstromrauch ferner einen ersten Artikeldetektor (22A) und einen zweiten Artikeldetektor (22B) umfasst, wobei der erste Artikeldetektor (22A) so im Artikeleinsetzteil (12) positioniert ist, dass er an den Rauchartikel (2) angrenzt, und wobei der zweite Artikeldetektor (22B) im Gehäuse (11) positioniert ist und vom ersten Artikeldetektor (22A) in der Längsrichtung um eine Strecke beabstandet ist, die gleich einer Strecke ist, um die die ersten Abschnitte (31A) mit einer schwer entflammbaren Beschichtung von den zweiten Abschnitten (31B) mit einer schwer entflammbaren Beschichtung beabstandet sind.

9. System zum Entfernen von Nebenstromrauch nach Anspruch 8, wobei die Vorrichtung (1) zum Entfernen von Nebenstromrauch dann, wenn der Rauchartikel (2) eingesetzt ist, detektiert, dass der Rauchartikel (2) für die Vorrichtung (1) zum Entfernen von Nebenstromrauch geeignet ist, wenn die ersten Abschnitte (31A) mit einer schwer entflammbaren Beschichtung und die zweiten Abschnitte (31B) mit einer schwer entflammbaren Beschichtung des Rauchartikels (2) gleichzeitig durch den ersten Artikeldetektor (22A) bzw. durch den zweiten Artikeldetektor (22B) detektiert werden.

10. System zum Entfernen von Nebenstromrauch nach Anspruch 8, wobei der erste Artikeldetektor (22A) und der zweite Artikeldetektor (22B) in der Längsrichtung der Vorrichtung (1) zum Entfernen von Nebenstromrauch in einem Abstand von 5 mm bis 10 mm voneinander beabstandet sind.

**Revendications**

1. Dispositif d'évacuation de fumée latérale (1) comportant :

   un boîtier (11) ayant un espace à fumer défini dans celui-ci ;
   une partie d'insertion d'article (12) positionnée sur une extrémité du boîtier (11) et ayant une zone ouverte à travers laquelle un article à fumer (2) est inséré dans l'espace à fumer ;
   une partie de traitement de fumée latérale (16) positionnée à une certaine distance d'une extrémité amont de l'article à fumer (2) inséré dans l'espace à fumer et configurée pour traiter de la fumée latérale produite à partir de l'article à fumer (2) ; et
   une partie de détection d'article (22) positionnée dans la partie d'insertion d'article (12) pour être adjacente à l'article à fumer (2) de manière à détecter l'article à fumer (2) inséré dans la partie d'insertion d'article (12),
   **caractérisé en ce que** l'article à fumer (2) comporte des portions de revêtement à faible inflammabilité (31, 31A, 31B) à l'intérieur d'un papier à cigarettes entourant la matière à fumer, et
   la partie de détection d'article (22) est configurée pour détecter les portions de revêtement à faible inflammabilité (31, 31A, 31B) de l'article à fumer (2).

2. Dispositif d'évacuation de fumée latérale (1) selon la revendication 1, comportant en outre une partie de commande (18) configurée pour commander des opérations globales du dispositif d'évacuation de fumée latérale (1),
   dans lequel un résultat de la détection de l'article à fumer (2) par la partie de détection d'article (22) est transféré vers la partie de commande (18).

3. Dispositif d'évacuation de fumée latérale (1) selon la revendication 1, dans lequel les portions de revêtement à faible inflammabilité (31, 31A, 31B) de l'article à fumer (2) contiennent de la gomme arabique.

4. Dispositif d'évacuation de fumée latérale (1) selon la revendication 1, dans lequel le dispositif d'évacuation de fumée latérale (1) comporte en outre une partie d'allumage (15) positionnée à l'intérieur du boîtier (11) et configurée pour allumer l'article à fumer (2) inséré dans l'espace à fumer,

dans lequel la partie d'allumage (15) allume l'article à fumer (2) lorsque la partie de détection d'article (22) détecte que l'article à fumer (2) est adapté au dispositif d'évacuation de fumée latérale (1).

5. Dispositif d'évacuation de fumée latérale (1) selon la revendication 1, dans lequel la partie de traitement de fumée latérale (16) comporte :

   un filtre (16A) configuré pour filtrer la fumée latérale ; et
   un ventilateur de ventilation (16B) par l'intermédiaire duquel la fumée latérale est évacuée,
   dans lequel le ventilateur de ventilation (16B) fonctionne en détectant la fumée latérale produite à partir de l'article à fumer (2).

6. Dispositif d'évacuation de fumée latérale (1) selon la revendication 4, comportant en outre une partie de support élastique (21) disposée de manière à supporter élastiquement une extrémité amont de l'article à fumer (2) à mesure que l'article à fumer (2) est inséré à travers la partie d'insertion d'article (12),

   dans lequel la partie d'allumage (15) est couplée à la partie de support élastique (21) et est disposée de manière à être en contact avec l'extrémité amont de l'article à fumer (2) à mesure que l'article à fumer (2) est inséré, et
   lorsque la partie d'allumage (15) entre d'abord en contact avec l'extrémité amont de l'article à fumer (2), les portions de revêtement à faible inflammabilité (31, 31A, 31B) de l'article à fumer (2) sont positionnées dans la zone ouverte de la partie d'insertion d'article (12).

7. Dispositif d'évacuation de fumée latérale (1) selon la revendication 6, dans lequel, lorsque la partie d'allumage (15) entre d'abord en contact avec l'extrémité amont de l'article à fumer (2), la partie de détection d'article (22) détecte une portion adjacente de l'article à fumer (2).

8. Système d'évacuation de fumée latérale comportant le dispositif d'évacuation de fumée latérale (1) selon la revendication 1 et un article à fumer (2), dans lequel l'article à fumer (2) comporte des premières portions de revêtement à faible inflammabilité (31A) et des secondes portions de revêtement à faible inflammabilité (31B) espacées des premières portions de revêtement à faible inflammabilité (31A) dans une direction longitudinale de l'article à fumer (2),

   le dispositif d'évacuation de fumée latérale (1) comportant en outre un premier détecteur d'article (22A) et un second détecteur d'article (22B),

dans lequel le premier détecteur d'article (22A) est positionné dans la partie d'insertion d'article (12) de manière à être adjacent à l'article à fumer (2), et le second détecteur d'article (22B) est positionné à l'intérieur du boîtier (11) et espacé du premier détecteur d'article (22A) dans la direction longitudinale d'une distance égale à une distance à laquelle les premières portions de revêtement à faible inflammabilité (31A) sont espacées des secondes portions de revêtement à faible inflammabilité (31B).

9. Système d'évacuation de fumée latérale selon la revendication 8, dans lequel, lorsque l'article à fumer (2) est inséré, le dispositif d'évacuation de fumée latérale (1) détecte que l'article à fumer (2) est adapté au dispositif d'évacuation de fumée latérale (1) lorsque les premières portions de revêtement à faible inflammabilité (31A) et les secondes portions de revêtement à faible inflammabilité (31B) de l'article à fumer (2) sont détectées simultanément par le premier détecteur d'article (22A) et le second détecteur d'article (22B), respectivement.

10. Système d'évacuation de fumée latérale selon la revendication 8, dans lequel le premier détecteur d'article (22A) et le second détecteur d'article (22B) sont espacés l'un de l'autre dans une direction longitudinale du dispositif d'évacuation de fumée latérale (1) d'une distance de 5 mm à 10 mm.

[Figure 1]

[Figure 2]

[Figure 3]

[Figure 4]

**EP 4 205 570 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20170130689 A
- CN 110786546 A
- KR 1020010031288